# EUROPEAN PATENT APPLICATION

(11) **EP 4 525 373 A1**
(43) Date of publication of application: **19.03.2025**
(21) Application number: 23819060.7
(22) Date of filing: 05.06.2023
(51) Int. Cl.: H04L 12/10

(54) **MASTER NODE, SLAVE NODE, POWER SUPPLY METHOD, AND RELATED DEVICE**

(30) Priority: 08.06.2022 CN 202210644562; 30.06.2022 CN 202210759600
(71) Applicant: Huawei Technologies Co., Ltd., Shenzhen, Guangdong 518129 (CN)
(72) Inventor: MU, Tong, Shenzhen, Guangdong 518129 (CN); LIN, Lifu, Shenzhen, Guangdong 518129 (CN); YANG, Yumeng, Shenzhen, Guangdong 518129 (CN); YANG, Jian, Shenzhen, Guangdong 518129 (CN); ZHUANG, Yan, Shenzhen, Guangdong 518129 (CN)
(74) Representative: Thun, Clemens
(86) International application number: PCT/CN2023/098266
(87) International publication number: WO 2023/236895

(57) **Abstract**

Embodiments of this application disclose a master node, a slave node, a power supply method, and a related device, to implement online power supply to a plurality of slave nodes in a point-to-multipoint topology. The master node and a plurality of first slave nodes are included in a point-to-point topology, and the master node is configured to: connect links between the master node and all of N first slave nodes in a time-division manner; obtain respective powers of the N first slave nodes; and supply power to a target slave node in the N first slave nodes based on the respective powers of the N first slave nodes and an output power of the master node.

## Description

This application claims priorities to Chinese Patent Application No. CN202210644562.4, filed with the China National Intellectual Property Administration on June 8, 2022 and entitled "ETHERNET CABLE POINT-TO-MULTIPOINT POWER SUPPLY METHOD, APPARATUS, AND SYSTEM", and to Chinese Patent Application No. CN202210759600.0, filed with the China National Intellectual Property Administration on June 30, 2022 and entitled "MASTER NODE, SLAVE NODE, POWER SUPPLY METHOD, AND RELATED DEVICE", both of which are incorporated herein by reference in their entireties.

### TECHNICAL FIELD

This application relates to the computer field, and in particular, to a master node, a slave node, a power supply method, and a related device.

### BACKGROUND

With rapid development of internet of things technologies, unified bus access is to become a development trend. Without changing a cabling architecture, transmitting data and a direct current through a bus can be not restricted by the environment, and reduce costs of construction, cabling, and operations and maintenance. Such a manner of providing online power supply for a device is gradually promoted and applied.

In a conventional online power supply method, regardless of a power over Ethernet (power over Ethernet, PoE) technology or a power over data line (power over data line, PoDL) technology, although data and a direct current can be simultaneously transmitted, the method can work in only a point-to-point topology, and online power supply in a point-to-multipoint scenario cannot be implemented.

### SUMMARY

This application provides a master node, a slave node, a power supply method, and a related device. The master node and the slave node are included in a point-to-multipoint topology. The master node connects only a path to one slave node in a same time period, to be specific, the point-to-multipoint topology is converted into a time-division point-to-point topology, to obtain a power of each slave node one by one, and powers on the slave node based on powers of slave nodes and an output power of the master node. This implements online power supply in the point-to-multipoint topology.

A first aspect of this application provides a master node, where the master node and N first slave nodes are included in a point-to-multipoint topology, N≥2, and N is an integer. The master node can implement the following functions:
connecting links between the master node and all of the N first slave nodes in a time-division manner, so that only one first slave node is connected to the master node in a same time period. In other words, the point-to-multipoint topology is converted into a time period-based point-to-point topology, and the point-to-point topology includes the master node and one slave node. The connection in the time-division manner includes time period-based connection, and a time period refers to a period of time. The master node may obtain a power of each of the N first slave nodes, and power on a target slave node in the N first slave nodes based on a relationship between respective powers of the N first slave nodes and an output power of the master node, where the target slave node includes all or some of the N first slave nodes. The master node may implement, in a manner of packet broadcasting, interaction required for powering on the target slave node.

It may be learnt from the foregoing technical solution that, this application has the following advantages: The master node and the slave node are included in the point-to-multipoint topology. The master node connects only a path to one slave node in a same time period, to be specific, the point-to-multipoint topology is converted into a time-division point-to-point topology, to obtain a power of each slave node one by one, and powers on the slave node based on powers of slave nodes and the output power of the master node. This implements online power supply in the point-to-multipoint topology.

In a possible implementation of the first aspect, the master node includes a control unit, and the control unit connects the links between the master node and all of the N first slave nodes in the time-division manner. It should be noted that, the control unit in this application may be a microcontroller unit (microcontroller unit, MCU), or may be another device that can control link connection, for example, a central processing unit (central processing unit, CPU) or an application-specific integrated circuit (application-specific integrated circuit, ASIC). The control unit may be selected based on a requirement of an actual application. This is not specifically limited herein.

In a possible implementation of the first aspect, the master node includes a power sourcing equipment (power sourcing equipment, PSE) chip. The master node may obtain the respective powers of the N first slave nodes one by one via the PSE chip. Specifically, when the master node is connected to each first slave node, the PSE chip performs power detection on each first slave node, which includes sending a detection voltage to each first slave node, to determine that the slave node includes a standard powered device (powered device, PD). Then, the PSE chip sends a classification voltage to each first slave node, and receives a feedback current from each first slave node, where the feedback current is determined by each first slave node based on the classification voltage sent by the PSE chip. The PSE chip determines a power level of each first slave node based on the feedback current of each first slave node, and the power level actually reflects the power of the first slave node.

In this application, power detection is performed on the first slave node via the PSE chip, and the first slave node is powered on only when it is determined that a powered device included in the first slave node is the standard powered device. This avoids a case in which a power supply system may be damaged when a non-standard powered device is powered on. Therefore, security and reliability of the technical solution are improved.

In a possible implementation of the first aspect, the master node includes the control unit, and the control unit may also be configured to obtain the respective powers of the N first slave nodes one by one. Specifically, when the master node is connected to each first slave node, the control unit performs power negotiation with each first slave node, and determines the power of each first slave node based on a result of the power negotiation. The power negotiation may be implemented based on interaction of an upper-layer protocol packet, for example, a link layer discovery protocol (link layer discovery protocol, LLDP) packet. In addition, the power negotiation may alternatively be implemented based on interaction of another upper-layer protocol packet, for example, a serial communication classification protocol (serial communication classification protocol, SCCP) packet, or a protocol packet that is defined by a vendor and that is configured to perform power negotiation. A specific type of the upper-layer protocol packet is selected based on an actual requirement. This is not specifically limited herein.

In addition, in this application, the master node obtains the power of each first slave node in a plurality of possible manners, and the manners are applicable to a plurality of scenarios. This improves flexibility of the technical solution of this application.

In a possible implementation of the first aspect, when the master node includes the control unit and the PSE chip, the master node may alternatively obtain the respective powers of the N first slave nodes in another manner. The master node may perform power detection on first slave nodes in a first part of the N first slave nodes via the PSE chip, to obtain respective powers of the first slave nodes in the first part. The master node performs power negotiation with a second part of the N first slave nodes via the control unit, to obtain respective powers of the first slave nodes in the second part. In other words, the master node integrates functions of the control unit and the PSE chip, to obtain the respective powers of the N first slave nodes. In this case, the first slave nodes in the first part and the first slave nodes in the second part form the N first slave nodes.

In a possible implementation of the first aspect, when the master node includes the control unit and the PSE chip, the master node may alternatively obtain the respective powers of the N first slave nodes in another manner. Specifically, the master node may perform power detection on first slave nodes in a first part of the N first slave nodes via the PSE chip, or perform power negotiation with first slave nodes in a first part via the control unit, to obtain respective powers of the first slave nodes in the first part. In addition, the master node directly obtains, via the control unit, respective powers reported by first slave nodes in a second part of the N first slave nodes. In this case, the first slave nodes in the first part and the first slave nodes in the second part form the N first slave nodes.

In a possible implementation of the first aspect, when the master node includes the control unit and the PSE chip, the master node may alternatively obtain the respective powers of the N first slave nodes in another manner. Specifically, the master node may perform power detection on first slave nodes in a first part of the N first slave nodes via the PSE chip, to obtain respective powers of the first slave nodes in the first part. The master node performs power negotiation with a second part of the N first slave nodes via the control unit, to obtain respective powers of the first slave nodes in the second part. The master node directly obtains, via the control unit, respective powers reported by first slave nodes in a third part of the N first slave nodes. In this case, the first slave nodes in the first part, the first slave nodes in the second part, and the first slave nodes in the third part form the N first slave nodes.

In this application, the master node obtains the respective powers of the N first slave nodes in a plurality of manners. The master node may obtain the respective powers of the N first slave nodes based on a single module (the control unit or the PSE chip) in the master node, or may obtain the respective powers of the N first slave nodes based on a plurality of modules in the master node. The manners are applicable to a plurality of scenarios, and flexibility and practicability of the technical solution of this application are improved.

In a possible implementation of the first aspect, the control unit in the master node may further implement power receiving of the target slave node. When a sum of the powers of the N first slave nodes is less than or equal to the output power of the master node, it means that the N first slave nodes can be powered on. The control unit determines that the target slave node includes the N first slave nodes, and then, connects the links between the master node and the N first slave nodes, to supply power to the N first slave nodes. Because the first slave node includes a slave control device and the powered device, the power of the first slave node includes a power of the slave control device and a power of the powered device. In this application, the slave control device is always powered on. When the sum of the powers of the N first slave nodes is less than or equal to the output power of the master node, it means that a power obtained by slave tracting powers of N slave control devices from a maximum output power of the master node is greater than or equal to a sum of powers of N powered devices. It may be understood that, because of a cable loss, the power of the first slave node further includes a power corresponding to the cable loss, and such a part of power may be included in the power of the powered device.

In a possible implementation of the first aspect, the control unit in the master node may further implement power receiving of the target slave node. When the sum of the powers of the N first slave nodes is greater than the output power of the master node, it means that the sum of the powers of the N first slave nodes exceeds a power budget of the master node. In this case, the control unit determines to supply power to some of the N first slave nodes, to be specific, determines that the target slave node includes M first slave nodes, where 1≤M<N. In addition, the control unit connects links between the master node and the M first slave nodes, to supply power to the M first slave nodes. Because the first slave node includes a slave control device and the powered device, the power of the first slave node includes a power of the slave control device and a power of the powered device. In this application, the slave control device is always powered on, and the power budget of the master node is actually a power reserved by the master node for the N powered devices, namely, a power obtained by slave tracting the powers of the N slave control devices from a maximum output power of the master node. It may be understood that, because of a cable loss, the power of the first slave node further includes a power corresponding to the cable loss, and such a part of power may be included in the power of the powered device. In addition, when determining the M first slave nodes, the control unit may select some first slave nodes from the N first slave nodes as the M first slave nodes according to a power supply policy.

In this application, it is determined, based on a relationship between the sum of the powers of the N first slave nodes and the output power of the master node, to supply power to some or all of the N first slave nodes, so that the technical solution of this application is applicable to different scenarios. This further improves practicability of the technical solution.

In a possible implementation of the first aspect, the master node may be further connected to a second slave node, and the second slave node is a slave node that newly accesses the power supply system when there is a first slave node that is already powered in the power supply system. The control unit included in the master node determines a remaining power of the master node, and obtains a power of the second slave node. If the power of the second slave node is less than or equal to the remaining power, the control unit controls a link between the master node and the second slave node to be connected, to supply power to the second slave node.

In this application, in addition to initially powering on the target slave node, the master node may further supply power to the second slave node that newly accesses the power supply system. This enriches application scenarios of the technical solution of this application.

In a possible implementation of the first aspect, a manner in which the master node obtains the power of the second slave node may be performing power negotiation with the second slave node via the control unit, or may be obtaining the power of the second slave node reported by the second slave node. This is not specifically limited herein.

In this application, the master node obtains the power of the second slave node in a plurality of manners, and the manners may be selected based on a requirement of an actual application. This further improves flexibility of the technical solution of this application.

In a possible implementation of the first aspect, the control unit may further send a target packet to each first slave node, where the target packet indicates a time period in which the master node is connected to each first slave node, to enable the master node to be connected to one first slave node in a same time period. The target packet includes packets of different types, and may be an LLDP packet. In addition, the target packet may alternatively be a packet of another type, for example, an SCCP packet, or another protocol packet that is defined by a vendor and that is configured to control the master node to be connected to the slave node. This is not specifically limited herein.

In a possible implementation of the first aspect, the master node may have different forms, and a master control device and a power sourcing equipment that are included in the master node may be coupled to each other, or decoupled from each other (in other words, both the master control device and the power sourcing equipment are independent devices). This is not specifically limited herein.

In this application, the master node may have a plurality of product forms, and is applicable to different scenarios. This further improves flexibility of the technical solution of this application.

A second aspect of this application provides a power supply method. The method is applied to a master node, the master node and N first slave nodes are included in a point-to-multipoint topology, N≥2, and N is an integer; and the method includes:
connecting links between the master node and all of the N first slave nodes in a time-division manner, and converting the point-to-multipoint topology into a time period-based point-to-point topology. When the master node is connected to one slave node, the master node obtains a power of the slave node. After successively connecting the link between the master node and each first slave node, the master node may obtain respective powers of the N first slave nodes. Then, the master node supplies power to a target slave node in the N first slave nodes based on the powers of the N first slave nodes and an output power of the master node, where the target slave node is all or some of the N first slave nodes. The master node may implement, in a manner of packet broadcasting, interaction required for powering on the target slave node.

In a possible implementation of the second aspect, the master node may obtain the respective powers of the N first slave nodes in a manner of power detection. Specifically, the master node receives a feedback current from each first slave node, where the feedback current is determined by each first slave node based on a classification voltage sent by the master node. Then, the master node determines a power of each first slave node based on the feedback current of each first slave node. The power detection actually includes: The master node sends a detection voltage and the classification voltage to the first slave node, where the detection voltage is used to determine whether the first slave node includes a standard powered device, and sends the classification voltage to the first slave node only when determining that the first slave node includes the standard powered device, to determine the power of the first slave node.

In a possible implementation of the second aspect, the master node may alternatively obtain the respective powers of the N first slave nodes in a manner of power negotiation. Specifically, the master node performs power negotiation with each first slave node based on an upper-layer protocol, and determines a power of each first slave node based on a negotiation result of the power negotiation. The power negotiation may be implemented based on interaction of an upper-layer protocol packet, for example, an LLDP packet. In addition, the power negotiation may alternatively be implemented based on interaction of another upper-layer protocol packet, for example, an SCCP packet, or a protocol packet that is defined by a vendor and that is configured to perform power negotiation. A specific type of the upper-layer protocol packet is selected based on an actual requirement. This is not specifically limited herein.

In a possible implementation of the second aspect, the master node may alternatively obtain the respective powers of the N first slave nodes in manners of power detection and power negotiation. For example, the master node may perform power detection on first slave nodes in a first part of the N first slave nodes via a PSE chip, to obtain respective powers of the first slave nodes in the first part. The master node performs power negotiation with a second part of the N first slave nodes via a control unit, to obtain respective powers of the first slave nodes in the second part. In this case, the first slave nodes in the first part and the first slave nodes in the second part form the N first slave nodes.

In a possible implementation of the second aspect, the master node may alternatively obtain the respective powers of the N first slave nodes in another manner. Specifically, the master node may perform power detection on the first slave nodes in a first part of the N first slave nodes, or perform power negotiation with first slave nodes in the first part, to obtain respective powers of the first slave nodes in the first part. In addition, the master node directly obtains respective powers reported by first slave nodes in a second part of the N first slave nodes. In this case, the first slave nodes in the first part and the first slave nodes in the second part form the N first slave nodes.

In a possible implementation of the second aspect, the master node may alternatively obtain the respective powers of the N first slave nodes in another manner. Specifically, the master node may perform power detection on first slave nodes in a first part of the N first slave nodes, to obtain respective powers of the first slave nodes in the first part. The master node performs power negotiation with a second part of the N first slave nodes, to obtain respective powers of the first slave nodes in the second part. The master node may further directly obtain respective powers reported by first slave nodes in a third part of the N first slave nodes. In this case, the first slave nodes in the first part, the first slave nodes in the second part, and the first slave nodes in the third part form the N first slave nodes.

In a possible implementation of the second aspect, the master node supplies power to the target slave node in the N first slave nodes based on a relationship between the powers of the N first slave nodes and the output power of the master node. Specifically, if a sum of the powers of the N first slave nodes is less than or equal to the output power of the master node, the master node determines that the target slave node includes the N first slave nodes. In addition, the master node connects the links between the master node and the N first slave nodes, to supply power to the N first slave nodes. Because the first slave node includes a slave control device and a powered device, the power of the first slave node includes a power of the slave control device and a power of the powered device. In this application, the slave control device is always powered on. When the sum of the powers of the N first slave nodes is less than or equal to the output power of the master node, it means that a power obtained by slave tracting powers of N slave control devices from a maximum output power of the master node is greater than or equal to a sum of powers of N powered devices. It may be understood that, because of a cable loss, the power of the first slave node further includes a power corresponding to the cable loss, and such a part of power may be included in the power of the powered device.

In a possible implementation of the second aspect, the master node supplies power to the target slave node in the N first slave nodes based on a relationship between the powers of the N first slave nodes and the output power of the master node. Specifically, if the sum of the powers of the N first slave nodes is greater than the output power of the master node, it means that the sum of the powers of the N first slave nodes exceeds a power budget of the master node. In this case, the master node determines that the target slave node includes M first slave nodes, where 1≤M<N. In addition, the master node connects links between the master node and the M first slave nodes, to supply power to the M first slave nodes. Because the first slave node includes a slave control device and a powered device, the power of the first slave node includes a power of the slave control device and a power of the powered device. In this application, the slave control device is always powered on, and the power budget of the master node is actually a power reserved by the master node for the N powered devices, namely, a power obtained by slave tracting the powers of the N slave control devices from a maximum output power of the master node. It may be understood that, because of a cable loss, the power of the first slave node further includes a power corresponding to the cable loss, and such a part of power may be included in the power of the powered device.

In a possible implementation of the second aspect, the master node is further connected to a second slave node, and the second slave node is a slave node newly added to a power supply system in which there is a first slave node that is already powered. After supplying power to the target slave node in the N first slave nodes, the master node determines a remaining power of the master node, and obtains a power of the second slave node. The master node supplies power to the second slave node when the power of the second slave node is less than or equal to the remaining power.

In a possible implementation of the second aspect, a manner in which the master node obtains the power of the second slave node may be performing power negotiation with the second slave node via the control unit, or may be obtaining the power of the second slave node reported by the second slave node. This is not specifically limited herein.

In a possible implementation of the second aspect, the master node connects the links between the master node and all of the N first slave nodes in a time-division manner by sending a target packet to each first slave node. The target packet indicates a time period in which the master node is connected to each first slave node, and a time period in which the link between each first slave node and the master node is connected is different from a time period in which a link between another first slave node and the master node is connected. The target packet includes packets of different types, and may be an LLDP packet. In addition, the target packet may alternatively be a packet of another type, for example, an SCCP packet, or another protocol packet that is defined by a vendor and that is configured to control the master node to be connected to the slave node. This is not specifically limited herein.

In a possible implementation of the second aspect, the master node may have different forms, and a master control device and a power sourcing equipment that are included in the master node may be coupled to each other, or decoupled from each other (in other words, both the master control device and the power sourcing equipment are independent devices). This is not specifically limited herein.

The master node in the second aspect of this application may further implement a function of the master node in any one of the first aspect and the possible implementations of the first aspect, and beneficial effects shown in the second aspect are similar to beneficial effects in the first aspect. Details are not described herein again.

A third aspect of this application provides a slave node, where the slave node and a master node are included in a point-to-multipoint topology. The point-to-multipoint topology further includes the master node, and the master node may supply power to a plurality of slave nodes in the point-to-multipoint topology. The slave node is configured to send a power of the slave node to the master node, and receive a power-on instruction from the master node. A link between the master node and the slave node is connected according to the power-on instruction, to power on the slave node. Because the slave node includes a slave control device and a powered device, the power of the slave node includes a power of the slave control device and a power of the powered device. It may be understood that, because of a cable loss, the power of the slave node further includes a power corresponding to the cable loss, and such a part of power may be included in the power of the powered device.

In this application, the slave node may actively send the power of the slave node to the master node, so that the master node obtains the power of each slave node in the point-to-multipoint topology, and supplies power to each slave node online, thereby implementing online power supply in the point-to-multipoint topology.

In a possible implementation of the third aspect, the slave node includes a control unit, and the control unit may obtain the power of the slave node, and send the power of the slave node to the master node. The control unit further receives the power-on instruction from the master node, and controls, according to the power-on instruction, the link between the master node and the slave node to be connected, to power on the slave node. It should be noted that, the control unit in this application may be a microcontroller unit, or may be another device that can control link connection, for example, a central processing unit or an application-specific integrated circuit. The control unit may be selected based on a requirement of an actual application. This is not specifically limited herein.

In a possible implementation of the third aspect, in addition to including the control unit, the slave node further includes a switch. The control unit may control, according to the power-on instruction, the switch to connect the link between the master node and the slave node. The switch is configured to connect the link between the master node and the slave node according to a control instruction of the control unit.

In a possible implementation of the third aspect, when the slave node includes the control unit and the switch, if the slave control device included in the slave node is coupled to the powered device included in the slave node, the powered device may be understood as load of the slave node, and the control unit may directly obtain the power of the powered device. If the slave control device included in the slave node is decoupled from the powered device included in the slave node, the control unit may determine the power of the powered device in a manner of power negotiation. The control unit and the switch are included in the slave control device.

In this application, regardless of whether the slave control device included in the slave node is coupled to or decoupled from the powered device included in the slave node, the power of the slave node may be determined via the control unit, so that the technical solution of this application may adapt to different requirements. This improves practicability of the technical solution of this application.

In a possible implementation of the third aspect, the slave node includes the slave control device and the powered device, and the slave control device is decoupled from the powered device. In this case, the slave control device includes a PSE chip and the control unit. The PSE chip may determine the power of the powered device in a manner of power detection. Specifically, the PSE chip sends a detection voltage to the powered device, where the detection voltage is used to determine whether the powered device is a standard powered device. When the powered device is the standard powered device, the PSE chip sends a classification voltage to the powered device, to determine the power of the powered device. The PSE chip receives a feedback current from the powered device, and determines the power of the powered device based on the feedback current. The feedback current is determined by the powered device based on the classification voltage of the PSE chip. The PSE chip further sends the power of the powered device to the control unit. Therefore, the control unit receives the power of the powered device from the PSE chip, and determines the power of the slave node based on the power of the powered device. The PSE chip is further configured to connect the link between the master node and the slave node according to the control instruction of the control unit.

In this application, when the slave control device included in the slave node is decoupled from the powered device included in the slave node, in addition to including the control unit and the switch, the slave node may further include the control unit and the PSE chip, so that the slave node has different product forms, and the power of the slave node may also be determined in different manners. This enriches implementations of the technical solution of this application.

A fourth aspect of this application provides a power supply method, where the power supply method is applied to a slave node, and the slave node and a master node are included in a point-to-multipoint topology. The power supply method includes:
sending a power of the slave node to the master node, and receiving a power-on instruction from the master node; and connecting a link between the master node and the slave node according to the power-on instruction, to power on the slave node.

In a possible implementation of the fourth aspect, before sending the power of the slave node to the master node, the slave node may further obtain the power of the slave node in a manner of power detection or power negotiation. This is not specifically limited herein.

In a possible implementation of the fourth aspect, when a slave control device included in the slave node is coupled to a powered device included in the slave node, the powered device may be understood as load of the slave node, and the slave node may directly obtain a power of the powered device.

The slave node in the fourth aspect of this application may further implement a function of the slave node in any one of the third aspect and the possible implementations of the third aspect, and beneficial effects shown in the fourth aspect are similar to beneficial effects in the third aspect. Details are not described herein again.

A fifth aspect of this application provides a power supply system, where a topology of the power supply system is a point-to-multipoint topology, the power supply system includes a master node and N first slave nodes, N≥2, and N is an integer. The master node is configured to: connect links between the master node and all of the N first slave nodes in a time-division manner, and obtain respective powers of the N first slave nodes. The master node supplies power to a target slave node in the N first slave nodes based on the powers of the N first slave nodes and an output power of the master node.

In a possible implementation of the fifth aspect, the master node may determine a power of each first slave node in a manner of power detection. Specifically, the master node may receive a feedback current from each first slave node, where the feedback current is determined by each first slave node based on a classification voltage sent by the master node. In addition, the master node determines the power of each first slave node based on the feedback current of each first slave node.

In a possible implementation of the fifth aspect, the master node may further determine the power of each first slave node in a manner of power negotiation. Specifically, the master node performs power negotiation with each first slave node, and determines a power of each first slave node based on a negotiation result of the power negotiation.

In a possible implementation of the fifth aspect, the N first slave nodes in the power supply system include a first set and a second set. The master node may obtain, in the manner of power negotiation and/or power detection, respective powers of first slave nodes included in the first set. In addition, the master node receives respective powers of first slave nodes included in the second set from the second set. In other words, the master node may obtain the respective powers of the N first slave nodes in the power supply system in different manners.

In a possible implementation of the fifth aspect, each first slave node in the second set may also determine the power of each first slave node in the manner of power negotiation and/or power detection.

In a possible implementation of the fifth aspect, when a sum of the powers of the N first slave nodes is less than or equal to the output power of the master node, it means that the master node may power on the N first slave nodes, to be specific, the master node determines that the target slave node includes the N first slave nodes. The master node connects the links between the master node and the N first slave nodes, to supply power to the N first slave nodes.

In a possible implementation of the fifth aspect, when the sum of the powers of the N first slave nodes is greater than the output power of the master node, it means that the sum of the powers of the N first slave nodes exceeds a power budget of the master node. To be specific, it is determined that the target slave node includes M first slave nodes of the N first slave nodes, where 1≤M<N. The master node connects links between the master node and the M first slave nodes, to supply power to the M first slave nodes.

In a possible implementation of the fifth aspect, the power supply system further includes a second slave node, and the second slave node is a slave node newly added to a power supply system in which there is a first slave node that is already powered. In this case, the master node may determine a remaining power of the master node and a power of the second slave node. If the power of the second slave node is less than or equal to the remaining power, the master node supplies power to the second slave node.

In a possible implementation of the fifth aspect, the master node may obtain the power of the second slave node in a plurality of manners. The master node may perform power negotiation with the second slave node, to determine the power of the second slave node, or may obtain the power of the second slave node that is actively reported by the second slave node. This is not specifically limited herein.

The master node in the fifth aspect of this application may further implement a function of the master node in any one the first aspect and the possible implementations of the first aspect, and beneficial effects shown in the fifth aspect are similar to beneficial effects shown in the first aspect. Details are not described herein again.

A sixth aspect of this application provides a power supply system, where a topology of the power supply system is a point-to-multipoint topology, the power supply system includes a master node and N first slave nodes, N≥2, and N is an integer. Each of the N first slave nodes may send a power of each first slave node to the master node. In this way, the master node obtains respective powers of the N first slave nodes. The master node supplies power to a target slave node in the N first slave nodes based on the powers of the N first slave nodes and an output power of the master node. Therefore, the target slave node may receive a power-on instruction from the master node, and connect a link between the master node and the target slave node according to the power-on instruction, to power on the target slave node.

In a possible implementation of the sixth aspect, each first slave node may obtain the power of each first slave node in a manner of power detection or power negotiation.

In a possible implementation of the sixth aspect, the power supply system further includes a second slave node, and the second slave node is a slave node newly added to a power supply system in which there is a first slave node that is already powered. In this case, the master node further determines a remaining power of the master node, and obtains a power of the second slave node. If the power of the second slave node is less than or equal to the remaining power, the master node supplies power to the second slave node.

The slave node in the sixth aspect of this application may further implement a function of the slave node in any one of the third aspect and the possible implementations of the third aspect, and beneficial effects shown in the sixth aspect are similar to beneficial effects shown in the third aspect. Details are not described herein again.

A seventh aspect of this application provides a master node, including a processor and a memory, where
the memory is configured to store computer instructions, and the processor is configured to invoke the computer instructions, to enable the master node to implement a function of the master node in any one of the first aspect and the possible implementations of the first aspect, and/or performs the power supply method described in any one of the second aspect and the possible implementations of the second aspect. Beneficial effects shown in the seventh aspect are similar to beneficial effects shown in the first aspect. Details are not described herein again.

An eighth aspect of this application provides a slave node, including a processor and a memory, where
the memory is configured to store computer instructions, and the processor is configured to invoke the computer instructions, to enable the slave node to perform the power supply method described in any one of the second aspect and the possible implementations of the second aspect, and/or implements a function of the slave node in any one of the third aspect and the possible implementations of the third aspect. Beneficial effects shown in the eighth aspect are similar to beneficial effects shown in the third aspect. Details are not described herein again.

A ninth aspect of this application provides a chip, including a processor and a memory. The memory is configured to store instructions, and the processor runs the instructions, to perform the power supply method described in any one of the second aspect and the possible implementations of the second aspect, or perform the power supply method described in any one of the fourth aspect and the possible implementations of the fourth aspect.

A tenth aspect of this application provides a chip system, including a master chip and a slave chip, where the master chip includes a first processor and a first memory, and the slave chip includes a second processor and a second memory.

The first memory is configured to store first instructions, and the first processor runs the first instructions, to perform the power supply method described in any one of the second aspect and the possible implementations of the second aspect. The second memory is configured to store second instructions, and the second processor runs the second instructions, to perform the power supply method described in any one of the fourth aspect and the possible implementations of the fourth aspect.

An eleventh aspect of this application provides a computer-readable storage medium, where the computer-readable storage medium stores a program; and when a computer executes the program, a function of the master node in any one of the first aspect and the possible implementations of the first aspect is implemented, and/or the power supply method described in any one of the second aspect and the possible implementations of the second aspect is performed; or the power supply method described in any one of the second aspect and the possible implementations of the second aspect is performed, and/or a function of the slave node in any one of the third aspect and the possible implementations of the third aspect is implemented.

A twelfth aspect of this application provides a computer program product. When the computer program product is executed on a computer, the computer implements a function of the master node in any one of the first aspect and the possible implementations of the first aspect, and/or performs the power supply method described in any one of the second aspect and the possible implementations of the second aspect, or performs the power supply method described in any one of the second aspect and the possible implementations of the second aspect, and/or implements a function of the slave node in any one of the third aspect and the possible implementations of the third aspect.

Beneficial effects shown in the ninth aspect to the twelfth aspect in this application are similar to beneficial effects shown in the first aspect or the third aspect. Details are not described herein again.

### BRIEF DESCRIPTION OF DRAWINGS

FIG. 1A is a diagram of a power supply system of a point-to-multipoint topology;
FIG. 1B is another diagram of a power supply system of a point-to-multipoint topology;
FIG. 2 is a diagram of a structure of a master node according to an embodiment of this application;
FIG. 3 is a diagram of another structure of a master node according to an embodiment of this application;
FIG. 4 is a schematic flowchart of a power supply method according to an embodiment of this application;
FIG. 5 is a diagram of a structure of a slave node according to an embodiment of this application;
FIG. 6 is a diagram of another structure of a slave node according to an embodiment of this application;
FIG. 7 is another schematic flowchart of a power supply method according to an embodiment of this application;
FIG. 8 is a diagram of a power supply system according to an embodiment of this application;
FIG. 9 is another diagram of a power supply system according to an embodiment of this application;
FIG. 10 is a diagram of another structure of a slave node according to an embodiment of this application;
FIG. 11 is another diagram of a power supply system according to an embodiment of this application;
FIG. 12 is another diagram of a power supply system according to an embodiment of this application;
FIG. 13 is a diagram of another structure of a master node according to an embodiment of this application; and
FIG. 14 is a diagram of another structure of a slave node according to an embodiment of this application.

### DESCRIPTION OF EMBODIMENTS

This application provides a master node, a slave node, a power supply method, and a related device. A master node and a slave node are included in a point-to-multipoint topology. The master node connects only a path to one slave node in a same time period, to be specific, the point-to-multipoint topology is converted into a time-division point-to-point topology, to obtain a power of each slave node one by one, and powers on the slave node based on powers of slave nodes and an output power of the master node. This implements online power supply in the point-to-multipoint topology.

The following describes embodiments of this application with reference to accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device. In addition, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

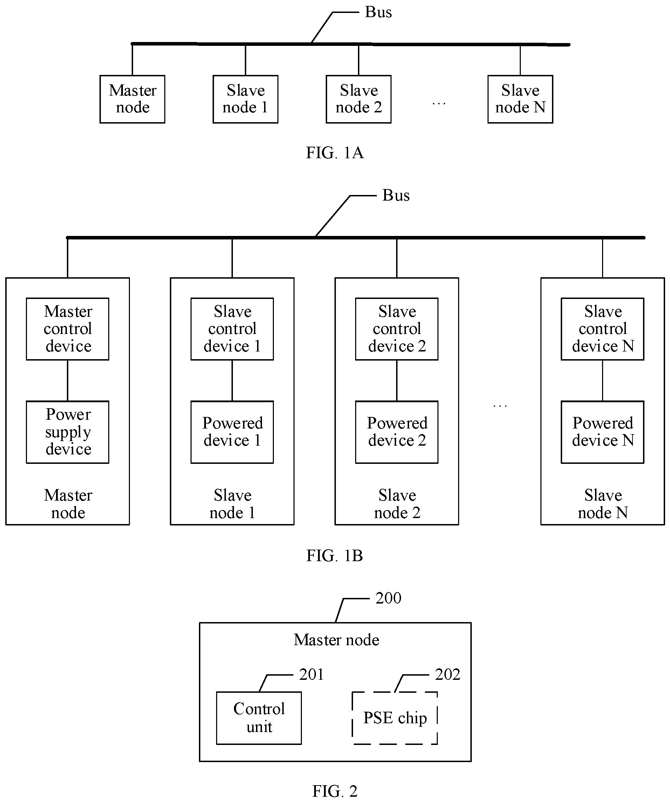

First, the point-to-multipoint topology applied to the master node and the slave node in this application is described. FIG. 1A and FIG. 1B each are a diagram of a point-to-multipoint topology.

As shown in FIG. 1A, in the point-to-multipoint topology, one master node may be connected to a plurality of slave nodes in parallel, and both the master node and the slave nodes are connected to a bus. In this application, the master node communicates with each slave node through a bus, and supplies power to each slave node online.

As shown in FIG. 1B, the master node includes a master control device and a power sourcing equipment, and the slave node includes a slave control device and a powered device. The master control device may control the power sourcing equipment to supply power to the powered device corresponding to the slave control device. The master control device may be coupled to the power sourcing equipment, and the master control device and the power sourcing equipment are presented as one device externally. Alternatively, the master control device may alternatively be decoupled from the power sourcing equipment, and the master control device and the power sourcing equipment are used as independent devices. Similarly, the slave control device may be coupled to the powered device, and the slave control device and the powered device are presented as one device externally. Alternatively, the slave control device may alternatively be decoupled from the powered device, and the slave control device and the powered device are used as independent devices.

The following describes the master node provided in this application.

In this application, the master node and N first slave nodes are included in a power supply system of the point-to-multipoint topology, where N≥2, and N is an integer. The master node connects links between the master node and all of the N first slave nodes in a time-division manner, so that only one slave node in the power supply system is connected to the master node in a same time period. In this way, the power supply system of the point-to-multipoint topology is converted into a time period-based point-to-point topology. The point-to-point topology includes the master node and one slave node, so that the master node may obtain a power of the first slave node. After connecting the link between the master node and each slave node in the time-division manner, the master node may obtain respective powers of the N first slave nodes. The connection in the time-division manner refers to time period-based connection, and a time period refers to a period of time. After obtaining the respective powers of the N first slave nodes, the master node powers on a target slave node in the N first slave nodes based on a relationship between the respective powers of the N first slave nodes and an output power of the master node, where the target slave node includes all or some of the N first slave nodes.

In some optional implementations, the master node sends a target packet to each first slave node, where the target packet indicates a time period in which the master node is connected to each first slave node, to enable the master node to be connected to one first slave node in a same time period. The target packet includes packets of different types, and may be an LLDP packet. In addition, the target packet may alternatively be a packet of another type, for example, an SCCP packet, or another protocol packet that is defined by a vendor and that is configured to control the master node to be connected to the slave node. This is not specifically limited herein.

In some optional implementations, the master node may implement, in a manner of packet broadcasting, interaction required for powering on the target slave node. A packet broadcast by the master node may be of packets of a plurality of types, for example, the LLDP packet. In addition, the packet may alternatively be a packet of another type, for example, the SCCP packet, or a protocol packet that is defined by the vendor and that is configured to control power-on. This is not specifically limited herein.

In this application, the master node and the slave node are included in the point-to-multipoint topology. The master node connects only a path to one slave node in a same time period, to be specific, the point-to-multipoint topology is converted into the time-division point-to-point topology, to obtain a power of each slave node one by one, and powers on the slave node based on powers of slave nodes and the output power of the master node. This implements online power supply in the point-to-multipoint topology.

In the following, a structure of the master node is described in detail. FIG. 2 is a diagram of a structure of a master node according to an embodiment of this application.

As shown in FIG. 2, in some optional implementations, a master node 200 includes a control unit 201, and the control unit 201 is configured to connect a link between the master node 200 and each of N first slave nodes in a time-division manner. The control unit 201 may be a microcontroller unit, or may be another device that can control link connection, for example, a central processing unit, an application-specific integrated circuit, or the like. The control unit may be selected based on a requirement of an actual application. This is not specifically limited herein.

As shown in FIG. 2, in some optional implementations, the master node 200 further includes a PSE chip 202. The master node 200 may obtain respective powers of the N first slave nodes via the PSE chip 202. Specifically, when the master node is connected to each first slave node, the PSE chip 202 performs power detection on each first slave node, which includes sending a detection voltage to each first slave node, to determine that a powered device (powered device, PD) included in the first slave node is a standard powered device. Then, the PSE chip 202 sends a classification voltage to each first slave node, and receives a feedback current from each first slave node, where the feedback current is determined by each first slave node based on the classification voltage sent by the PSE chip 202. The PSE chip 202 determines, based on the feedback current of each first slave node, a power level of the powered device included in each first slave node, and the power level actually reflects a power of the powered device included in the first slave node.

The PSE chip 202 may periodically send the classification voltage to the first slave node in a closed time period between the master node and each first slave node, where the classification voltage is a pulse voltage, and the classification voltage is lower than a normal power supply voltage of the powered device included in the first slave node.

It should be noted that, because the first slave node includes a slave control device and the powered device, a power of the first slave node includes a power of the slave control device and the power of the powered device. The PSE chip 202 further obtains the power of the slave control device, and obtains a power of each first slave node based on the power of the slave control device and the power of the powered device included in the first slave node.

In some optional implementations, a point-to-multipoint topology may further include some slave nodes connected to non-standard powered devices. Because these powered devices are not standard powered devices, the master node does not power on these powered devices.

In this application, power detection is performed on the first slave node via the PSE chip, and the first slave node is powered on only when it is determined that the powered device included in the first slave node is the standard powered device. This avoids a case in which a power supply system may be damaged when the non-standard powered device is powered on. Therefore, security and reliability of the technical solution are improved.

In some optional implementations, the master node 200 may further perform power negotiation with each of the N first slave nodes via the control unit 201, to determine a power of each first slave node based on a negotiation result of the power negotiation. The power negotiation may be implemented based on interaction of an upper-layer protocol packet, for example, an LLDP packet. In addition, the power negotiation may alternatively be implemented based on interaction of another upper-layer protocol packet, for example, an SCCP packet, or a protocol packet that is defined by a vendor and that is configured to perform power negotiation. A specific type of the upper-layer protocol packet is selected based on an actual requirement. This is not specifically limited herein.

It should be noted that, during power negotiation, a power sourcing equipment included in the master node 200 outputs a low voltage, so that the powered device included in the first slave node works in a low power consumption mode. Therefore, all powered devices perform power negotiation with the master node 200 in turn at low power consumption.

In addition, in this application, the master node obtains the power of each first slave node in a plurality of possible manners, and the manners are applicable to a plurality of scenarios. This improves flexibility of the technical solution of this application.

In some optional implementations, when the master node 200 includes the control unit 201 and the PSE chip 202, the master node 200 may obtain the respective powers of the N first slave nodes with reference to functions of the control unit 201 and the PSE chip 202. For example, the master node 200 performs power detection on first slave nodes in a first part of the N first slave nodes via the PSE chip 202, to obtain respective powers of the first slave nodes in the first part. The master node 200 performs power negotiation with a second part of the N first slave nodes via the control unit 201, to obtain respective powers of the first slave nodes in the second part. In this case, the first slave nodes in the first part and the first slave nodes in the second part form the N first slave nodes.

In some optional implementations, when the master node 200 includes the control unit 201 and the PSE chip 202, the master node 200 may alternatively obtain the respective powers of the N first slave nodes in another manner. Specifically, the master node 200 may perform power detection on the first slave nodes in the first part of the N first slave nodes via the PSE chip 202, or perform power negotiation with the first slave nodes in the first part via the control unit 201, to obtain the respective powers of the first slave nodes in the first part. In addition, the master node 200 directly obtains, via the control unit 201, the respective powers reported by the first slave nodes in the second part of the N first slave nodes. In this case, the first slave nodes in the first part and the first slave nodes in the second part form the N first slave nodes.

In some optional implementations, when the master node 200 includes the control unit 201 and the PSE chip 202, the master node 200 may alternatively obtain the respective powers of the N first slave nodes in another manner. Specifically, the master node may perform power detection on first slave nodes in the first part of the N first slave nodes via the PSE chip 202, to obtain the respective powers of the first slave nodes in the first part. The master node 200 performs power negotiation with the second part of the N first slave nodes via the control unit 201, to obtain the respective powers of the first slave nodes in the second part. The master node 200 directly obtains, via the control unit 201, respective powers reported by first slave nodes in a third part of the N first slave nodes. In this case, the first slave nodes in the first part, the first slave nodes in the second part, and the first slave nodes in the third part form the N first slave nodes.

In this application, the master node obtains the respective powers of the N first slave nodes in a plurality of manners. The master node may obtain the respective powers of the N first slave nodes based on a single module (the control unit or the PSE chip) in the master node, or may obtain the respective powers of the N first slave nodes based on a plurality of modules in the master node. The manners are applicable to a plurality of scenarios, and flexibility and practicability of the technical solution of this application are improved.

In some optional implementations, the control unit 201 included in the master node 200 may further implement power receiving of a target slave node in the N first slave nodes. When a sum of the powers of the N first slave nodes is less than or equal to the output power of the master node, it means that the master node may power on the N first slave nodes, and the control unit 201 determines that the target slave node includes the N first slave nodes. Then, the control unit 201 connects links between the master node and the N first slave nodes, to supply power to the N first slave nodes. Because the first slave node includes the slave control device and the powered device, the power of the first slave node includes the power of the slave control device and the power of the powered device. In this application, the slave control device is always powered on. When the sum of the powers of the N first slave nodes is less than or equal to the output power of the master node, it means that a power obtained by slave tracting powers of N slave control devices from a maximum output power of the master node is greater than or equal to a sum of powers of N powered devices. It may be understood that, because of a cable loss, the power of the first slave node further includes a power corresponding to the cable loss, and such a part of power may be included in the power of the powered device.

In some optional implementations, when the sum of the powers of the N first slave nodes is greater than the output power of the master node, it means that the sum of the powers of the N first slave nodes exceeds a power budget of the master node. In this case, the control unit 201 determines to supply power to some of the N first slave nodes, to be specific, determines that the target slave node includes M first slave nodes of the N first slave nodes, where 1≤M<N. In addition, the control unit 201 connects links between the master node and the M first slave nodes, to supply power to the M first slave nodes. Because the first slave node includes the slave control device and the powered device, the power of the first slave node includes the power of the slave control device and the power of the powered device. In this application, the slave control device is always powered on, and the power budget of the master node is actually a power reserved by the master node for the N powered devices, namely, a power obtained by slave tracting the powers of the N slave control devices from the maximum output power of the master node. It may be understood that, because of the cable loss, the power of the first slave node further includes the power corresponding to the cable loss, and such a part of power may be included in the power of the powered device.

The control unit 201 may determine the M first slave nodes from the N first slave nodes according to a power supply policy. There are a plurality of possible power supply policies. The following describes some possible power supply policies by using examples.

For example, the master node 200 may supply, in ascending order of powers, power to powered devices corresponding to the first slave nodes, until total powers of powered devices exceed the power budget of the master node after a next powered device is added. According to the power supply policy, power can be supplied to a maximum quantity of powered devices.

For example, the master node 200 may supply, in descending order of powers, power to the powered devices corresponding to the first slave nodes, until total powers of powered devices exceed the power budget of the master node after a next powered device is added. According to the power supply policy, power supply to a high-power powered device can be preferentially ensured.

For example, the master node 200 may alternatively obtain power receiving priorities of the powered devices in the first slave nodes, and supply, in an order of the power receiving priorities, power to the powered devices corresponding to the first slave nodes, until total powers of powered devices exceed the power budget of the master node after a next powered device is added. The master node 200 obtains the power receiving priority in a plurality of manners. The powered device may directly report the power receiving priority to the power sourcing equipment included in the master node. In addition, the master node 200 may alternatively obtain the power receiving priority in another manner. For example, the powered device reports the power receiving priority to the slave control device. When the master node obtains the power of the slave node in a manner of the power negotiation, the master node may also obtain the power receiving priority of the powered device fed back by the slave control device. In this application, the master node obtains the power receiving priority of the powered device in a plurality of manners. This is not specifically limited herein.

In this application, it is determined, based on the relationship between the sum of the powers of the N first slave nodes and the output power of the master node, to supply power to some or all of the N first slave nodes, so that the technical solution of this application is applicable to different scenarios. This further improves practicability of the technical solution.

In some optional implementations, after supplying power to the first slave node, the master node 200 may further obtain power supply parameters such as a power and a current of a powered device included in each first slave node that are periodically reported by each first slave node to the master node 200, and node backhaul data. A manner used by the first slave node to backhaul data to the master node depends on a communication mechanism between the master node 200 and each first slave node. For example, a communication mechanism in a time division manner may be used, and fixed slot allocation or contention transmission is used. This is not specifically limited herein.

In some optional implementations, the master node 200 is further connected to a second slave node, and the second slave node is a slave node newly added to a system in which there is a first slave node that is already powered. The control unit 201 of the master node 200 determines a remaining power of the master node, and obtains a power of the second slave node. The control unit 201 determines, based on a relationship between the power of the second slave node and the remaining power, whether to supply power to the second slave node. If the power of the second slave node is less than or equal to the remaining power, the control unit 201 supplies power to the second slave node. If the power of the second slave node is greater than the remaining power, the control unit 201 does not supply power to the second slave node. The remaining power of the master node 200 may be determined in the following manner:

Remaining power=Output power of the master node-Total power consumption of slave nodes that are already powered on in the power supply system.

In some optional implementations, a manner in which the master node 200 obtains the power of the second slave node may be performing power negotiation with the second slave node via the control unit 201, or may be obtaining the power of the second slave node reported by the second slave node. This is not specifically limited herein.

In this application, in addition to initially powering on the target slave node, the master node may further supply power to the second slave node that newly accesses the power supply system. This enriches application scenarios of the technical solution of this application. In addition, the master node obtains the power of the second slave node in a plurality of manners, and the manners may be selected based on a requirement of an actual application. This further improves flexibility of the technical solution of this application.

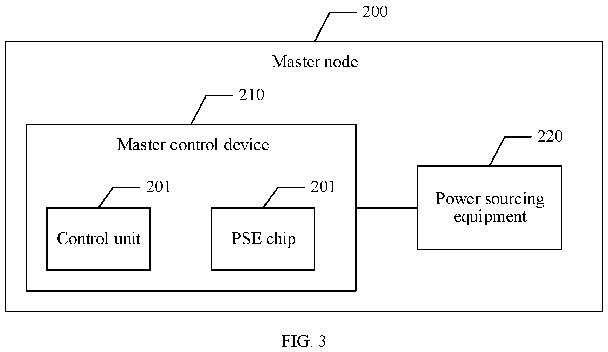

In some optional implementations, a master node 200 has a plurality of product forms. FIG. 3 is a diagram of a structure of a master node according to an embodiment of this application.

As shown in FIG. 3, the master node 200 includes a master control device 210 and a power sourcing equipment 220, and the master control device 210 includes a control unit 201 and a PSE chip 202. During actual application, the master control device 210 may be coupled to or decoupled from the power sourcing equipment 220 (to be specific, both the master control device 210 and the power sourcing equipment 220 are independent devices). This is not specifically limited herein.

In this application, the master node may have a plurality of product forms, and is applicable to different scenarios. This further improves flexibility of the technical solution of this application.

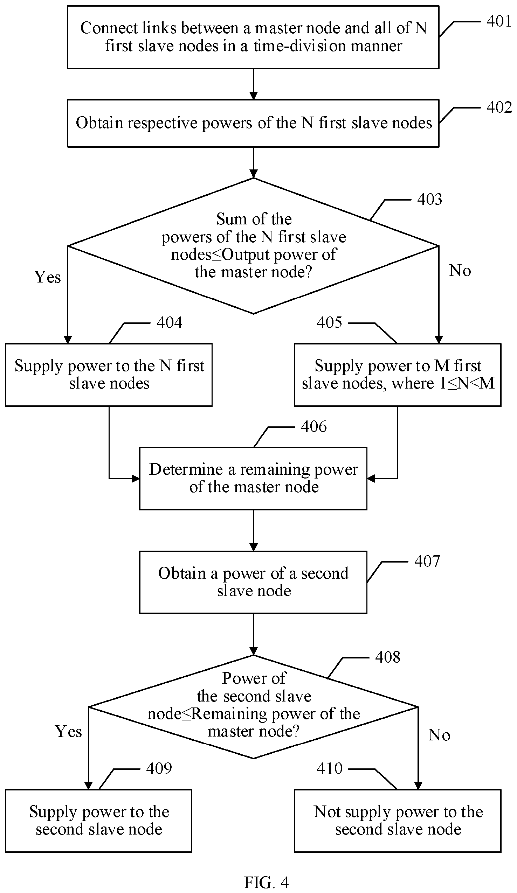

Based on the master node described above, this application further provides a power supply method. The power supply method is performed by the master node. In the following, FIG. 4 is a schematic flowchart of a power supply method according to an embodiment of this application. The method includes the following steps.

401: Connect a link between a master node and each of N first slave nodes in a time-division manner.

In this application, the master node and the N first slave nodes are included in a point-to-multipoint topology. The links between the master node and all of the N first slave nodes is connected in the time-division manner, and the point-to-multipoint topology is converted into a time period-based point-to-point topology.

In some optional implementations, the master node sends a target packet to each first slave node, where the target packet indicates a time period in which the master node is connected to each first slave node, to enable the master node to be connected to one first slave node in a same time period. The target packet includes packets of different types, and may be an LLDP packet. In addition, the target packet may alternatively be a packet of another type, for example, an SCCP packet, or another protocol packet that is defined by a vendor and that is configured to control the master node to be connected to the slave node. This is not specifically limited herein.

402: Obtain respective powers of the N first slave nodes.

When the master node is connected to one slave node, the master node obtains a power of the slave node. After successively connecting the link between the master node and each first slave node, the master node may obtain the respective powers of the N first slave nodes. The master node obtains the power of the first slave node in a plurality of manners, and may obtain the power of the first slave node in a manner of power detection or in a manner of power negotiation. In addition, the master node may alternatively directly obtain the power reported by the first slave node. This is not specifically limited herein. The following separately describes possible cases.

In some optional implementations, the master node may obtain the respective powers of the N first slave nodes in the manner of power detection. Specifically, the master node receives a feedback current from each first slave node, where the feedback current is determined by each first slave node based on a classification voltage sent by the master node. Then, the master node determines the power of each first slave node based on the feedback current of each first slave node. The master node determines a power of each first slave node based on the feedback current of each first slave node. The power detection actually includes: The master node sends a detection voltage and the classification voltage to the first slave node, where the detection voltage is used to determine whether the first slave node includes a standard powered device, and sends the classification voltage to the first slave node only when determining that the first slave node includes the standard powered device, to determine the power of the first slave node.

In this application, power detection is performed on the first slave node, and the first slave node is powered on only when it is determined that the powered device included in the first slave node is the standard powered device. This avoids a case in which a power supply system may be damaged when a non-standard powered device is powered on. Therefore, security and reliability of the technical solution are improved.

In some optional implementations, the master node may alternatively obtain the respective powers of the N first slave nodes in the manner of power negotiation. Specifically, the master node performs power negotiation with each first slave node based on an upper-layer protocol, and determines a power of each first slave node based on a negotiation result of the power negotiation. The power negotiation may be implemented based on interaction of an upper-layer protocol packet, for example, an LLDP packet. In addition, the power negotiation may alternatively be implemented based on interaction of another upper-layer protocol packet, for example, an SCCP packet, or a protocol packet that is defined by a vendor and that is configured to perform power negotiation. A specific type of the upper-layer protocol packet is selected based on an actual requirement. This is not specifically limited herein.

In some optional implementations, the master node may alternatively obtain the respective powers of the N first slave nodes in another manner. Specifically, the master node may perform power detection on first slave nodes in a first part of the N first slave nodes, or perform power negotiation with the first slave nodes in the first part, to obtain respective powers of the first slave nodes in the first part. In addition, the master node directly obtains respective powers reported by first slave nodes in a second part of the N first slave nodes. In this case, the first slave nodes in the first part and the first slave nodes in the second part form the N first slave nodes.

In some optional implementations, the master node may alternatively obtain the respective powers of the N first slave nodes in another manner.Specifically, the master node may perform power detection on the first slave nodes in the first part of the N first slave nodes, to obtain the respective powers of the first slave nodes in the first part. The master node performs power negotiation with the second part of the N first slave nodes, to obtain the respective powers of the first slave nodes in the second part. The master node may further directly obtain respective powers reported by first slave nodes in a third part of the N first slave nodes. In this case, the first slave nodes in the first part, the first slave nodes in the second part, and the first slave nodes in the third part form the N first slave nodes.

In addition, in this application, the master node obtains the power of each first slave node in a plurality of possible manners, and the manners are applicable to a plurality of scenarios. This improves flexibility of the technical solution of this application.

403: Determine whether a sum of the powers of the N first slave nodes is not greater than an output power of the master node; and perform step 404 if the sum of the powers of the N first slave nodes is not greater than the output power of the master node; or perform step 405 if the sum of the powers of the N first slave nodes is greater than the output power of the master node.

After obtaining the respective powers of the N first slave nodes, the master node compares a relationship between the sum of the powers of the N first slave nodes and the output power of the master node, and determines to supply power to a target slave node in the N first slave nodes. The target slave node is all or some of the N first slave nodes.

If the sum of the powers of the N first slave nodes is less than or equal to the output power of the master node, the master node determines that the target slave node includes the N first slave nodes. If the sum of the powers of the N first slave nodes is greater than the output power of the master node, it means that the sum of the powers of the N first slave nodes exceeds a power budget of the master node. In this case, the master node determines that the target slave node includes M first slave nodes, where 1≤M<N. The master node may select the M first slave nodes from the N first slave nodes according to different power supply policies. Related content of the power supply policy is described above when the master node is described. Details are not described herein again.

Because the first slave node includes a slave control device and the powered device, the power of the first slave node includes a power of the slave control device and a power of the powered device. In this application, the slave control device is always powered on, and the power budget of the master node is actually a power reserved by the master node for N powered devices, namely, a power obtained by slave tracting powers of N slave control devices from a maximum output power of the master node. It may be understood that, because of a cable loss, the power of the first slave node further includes a power corresponding to the cable loss, and such a part of power may be included in the power of the powered device.

In some optional implementations, the master node may implement, in a manner of packet broadcasting, interaction required for powering on the target slave node. A packet broadcast by the master node may be of packets of a plurality of types, for example, the LLDP packet. In addition, the packet may alternatively be a packet of another type, for example, the SCCP packet, or a protocol packet that is defined by the vendor and that is configured to control power-on. This is not specifically limited herein.

404: Supply power to the N first slave nodes.

When the sum of the powers of the N first slave nodes is less than or equal to the output power of the master node, the master node determines that the target slave node includes the N first slave nodes, and connects the links between the master node and the N first slave nodes, to supply power to the N first slave nodes.

405: Supply power to the M first slave nodes, where 1≤M<N.

When the sum of the powers of the N first slave nodes is greater than the output power of the master node, the master node determines that the target slave node includes the M first slave nodes, and connects links between the master node and the M first slave nodes, to supply power to the M first slave nodes.

It may be learnt from the foregoing technical solution that, this application has the following advantages: The master node and the slave node are included in the point-to-multipoint topology. The master node connects only a path to one slave node in a same time period, to be specific, the point-to-multipoint topology is converted into the time-division point-to-point topology, to obtain a power of each slave node one by one, and powers on the slave node based on powers of slave nodes and the output power of the master node. This implements online power supply in the point-to-multipoint topology. In addition, it is determined, based on the relationship between the sum of the powers of the N first slave nodes and the output power of the master node, to supply power to some or all of the N first slave nodes, so that the technical solution of this application is applicable to different scenarios. This further improves practicability of the technical solution.

In some optional embodiments, after step 404 or step 405, the master node may further perform the following steps.

406: Determine a remaining power of the master node.

The master node may further obtain power supply parameters such as a power and a current of a powered device included in each first slave node that are periodically reported by each first slave node to the master node, and node backhaul data. A manner used by the first slave node to backhaul data to the master node depends on a communication mechanism between the master node and each first slave node. For example, a communication mechanism in a time division manner may be used, and fixed slot allocation or contention transmission is used. This is not specifically limited herein.

The master node may determine the remaining power based on the data backhauled by each first slave node. Remaining power=Output power of the master node-Total power consumption of slave nodes that are already powered on in the power supply system.

407: Obtain a power of a second slave node.

The master node may be further connected to the second slave node, and the second slave node is a slave node newly added to a power supply system in which there is a first slave node that is already powered. In other words, before the second slave node accesses the power supply system, the power supply system includes the first slave node that is already powered.

The master node may obtain the power of the second slave node in different manners. For example, the master node performs power negotiation with the second slave node, to determine the power of the second slave node. Alternatively, the master node may obtain the power of the second slave node that is directly reported by the second slave node. This is not limited in this application.

In this application, the master node obtains the power of the second slave node in a plurality of manners, and the manners may be selected based on a requirement of an actual application. This further improves flexibility of the technical solution of this application.

408: Determine whether the power of the second slave node is not greater than the remaining power of the master node; and perform step 409 if the power of the second slave node is not greater than the remaining power of the master node; or perform step 410 if the power of the second slave node is greater than the remaining power of the master node.

The master node compares the power of the second slave node with the remaining power of the master node, to determine whether to supply power to the second slave node.

409: Supply power to the second slave node.

When the power of the second slave node is less than or equal to the remaining power, it means that the master node still has an abundant power, and the master node can supply power to the second slave node.

410: Not supply power to the second slave node.

When the power of the second slave node is greater than the remaining power, the master node cannot supply power to the second slave node.

In some optional embodiments, the master node may have different forms, and a master control device and a power sourcing equipment that are included in the master node may be coupled to each other, or decoupled from each other (in other words, both the master control device and the power sourcing equipment are independent devices). This is not specifically limited herein.

In this application, in addition to initially powering on the target slave node, the master node may further supply power to the second slave node that newly accesses the power supply system. This enriches application scenarios of the technical solution of this application.

The following describes the slave node provided in this application.

In this application, the slave node and the master node are included in the power supply system of the point-to-multipoint topology, and the master node may supply power to a plurality of slave nodes online in the point-to-multipoint topology. The slave node sends a power of the slave node to the master node, and receives a power-on instruction from the master node. The link between the master node and the slave node is connected according to the power-on instruction, to power on the slave node. Because the slave node includes the slave control device and the powered device, the power of the slave node includes the power of the slave control device and the power of the powered device. It may be understood that, because of the cable loss, the power of the slave node further includes the power corresponding to the cable loss, and such a part of power may be included in the power of the powered device.

In this application, the slave node may actively send the power of the slave node to the master node, so that the master node obtains the power of each slave node in the point-to-multipoint topology, and supplies power to each slave node online, thereby implementing online power supply in the point-to-multipoint topology.

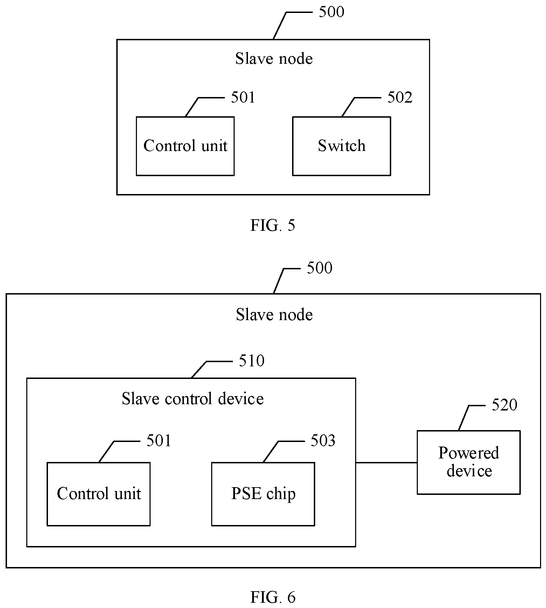

The following further describes a structure of a slave node. FIG. 5 is a diagram of a structure of a slave node according to an embodiment of this application.

As shown in FIG. 5, a slave node 500 includes a control unit 501. The control unit 501 may obtain a power of the slave node, and send the power of the slave node to a master node. The control unit further receives a power-on instruction from the master node, and controls, according to the power-on instruction, a link between the master node and the slave node 500 to be connected, to power on the slave node 500.

It should be noted that, the control unit 501 in this application may be a microcontroller unit, or may be another device that can control link connection, for example, a central processing unit or an application-specific integrated circuit. The control unit may be selected based on a requirement of an actual application. This is not specifically limited herein.

In this application, the control unit 501 may obtain the power of the slave node in different manners. The following describes possible cases.

In some optional implementations, as shown in FIG. 5, the slave node 500 includes the control unit 501 and a switch 502. The control unit 501 is configured to control, according to the power-on instruction, the switch 502 to connect the link between the master node and the slave node. The switch 502 is configured to connect the link between the master node and the slave node 500 according to a control instruction of the control unit 501.

In this case, if a slave control device included in the slave node 500 is coupled to a powered device included in the slave node 500, the powered device may be understood as load of the slave node 500, and the control unit 501 may directly obtain a power of the powered device. If the slave control device included in the slave node 500 is decoupled from the powered device included in the slave node 500, the control unit 501 may determine the power of the powered device in a manner of power negotiation. A specific manner of the power negotiation is described above. Details are not described herein again.

In this application, regardless of whether the slave control device included in the slave node is coupled to or decoupled from the powered device included in the slave node, the power of the slave node may be determined via the control unit, so that the technical solution of this application may adapt to different requirements. This improves practicability of the technical solution of this application.

In some optional implementations, a slave node may alternatively have different structures. FIG. 6 is a diagram of a structure of a slave node according to an embodiment of this application.

Assuming that in the embodiment shown in FIG. 6, a slave control device 510 included in a slave node 500 is decoupled from a powered device 520, the slave control device 510 includes a control unit 501 and a PSE chip 503.

The PSE chip 503 may determine a power of the powered device 520 in a manner of power detection. Specifically, the PSE chip 503 sends a detection voltage to the powered device 520, where the detection voltage is used to determine whether the powered device 520 is a standard powered device. When the powered device 520 is the standard powered device, the PSE chip 503 sends a classification voltage to the powered device 520, to determine the power of the powered device 520. The powered device 520 obtains a feedback current based on the classification voltage of the PSE chip, and transmits the feedback current to the PSE chip 503. The PSE chip 503 determines the power of the powered device 520 based on the feedback current.

The PSE chip 503 sends the power of the powered device 520 to the control unit 501. Therefore, the control unit 501 receives the power of the powered device 520 from the PSE chip 503, determines a power of the slave node 500 based on the power of the powered device 520, and reports the power of the slave node 500 to a master node. After receiving a power-on instruction from the master node, the control unit 501 sends a control instruction to the PSE chip 503, so that the PSE chip connects a link between the master node and the slave node according to the control instruction.

In some optional implementations, in the embodiment shown in FIG. 6, the slave control device 510 may further include a switch (not shown in FIG. 6). In this case, after receiving the power-on instruction from the master node, the control unit 501 controls the switch to connect the link between the master node and the slave node.

In this application, when the slave control device included in the slave node is decoupled from the powered device included in the slave node, in addition to including the control unit and the switch, the slave node may further include the control unit and the PSE chip, so that the slave node has different product forms, and the power of the slave node may also be determined in different manners. This enriches implementations of the technical solution of this application.

Based on the slave node described above, embodiments of this application further provide a power supply method. The power supply method is performed by the slave node, and the slave node and the master node are included in a point-to-multipoint topology.

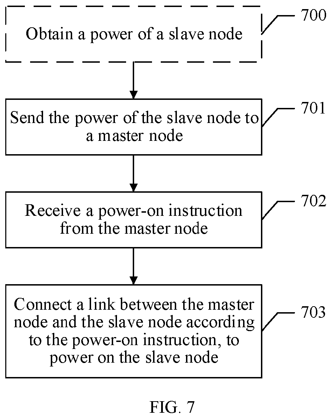

FIG. 7 is a schematic flowchart of a power supply method according to an embodiment of this application. The method includes the following steps.

701: Send a power of a slave node to a master node.

Before the slave node is powered on, the slave node needs to report a power of the slave node to the master node, so that the master node comprehensively considers a power of each slave node and determines a slave node that can perform online power supply.

702: Receive a power-on instruction from the master node.

When determining to supply power to the slave node online, the master node sends the power-on instruction to the slave node, so that the slave node receives the power-on instruction.

703: Connect a link between the master node and the slave node according to the power-on instruction, to power on the slave node.

As a structure of the slave node changes, there are a plurality of possible manners in which the slave node connects, according to the power-on instruction, the link between the master node and the slave node. The manner may be controlling a switch to connect the link between the master node and the slave node, or may be controlling the link between the master node and the slave node to be connected via a PSE chip. For specific content, refer to related descriptions in embodiments shown in FIG. 5 and FIG. 6. Details are not described herein again.

In some optional implementations, before step 701, the slave node may further perform step 700: Obtain the power of the slave node.

As described in embodiments shown in FIG. 5 and FIG. 6, the slave node may obtain the power of the slave node in a manner of power detection or power negotiation. Optionally, when a slave control device included in the slave node is coupled to a powered device included in the slave node, the powered device may be understood as load of the slave node, and the slave node may directly obtain the power of the slave node. For specific content, refer to related content in embodiments shown in FIG. 5 and FIG. 6. Details are not described herein again.

In this application, the power of the slave node may be obtained in a plurality of manners. This further improves flexibility of the technical solution of this application.

This application further provides a power supply system. The power supply system includes a master node and N first slave nodes, where N≥2, and N is an integer. The master node is configured to: connect links between the master node and all of the N first slave nodes in a time-division manner, and obtain respective powers of the N first slave nodes. The master node supplies power to a target slave node in the N first slave nodes based on the powers of the N first slave nodes and an output power of the master node. The target slave node includes all or some of the N first slave nodes.

When a sum of the powers of the N first slave nodes is less than or equal to the output power of the master node, it means that the master node may power on the N first slave nodes, to be specific, the master node determines that the target slave node includes the N first slave nodes. A control unit 0 in the master node connects the links between the master node and the N first slave nodes, to supply power to the N first slave nodes.

When the sum of the powers of the N first slave nodes is greater than the output power of the master node, it means that the sum of the powers of the N first slave nodes exceeds a power budget of the master node. To be specific, it is determined that the target slave node includes M first slave nodes of the N first slave nodes, where 1≤M<N. The control unit 0 in the master node connects links between the master node and the M first slave nodes, to supply power to the M first slave nodes.

In this application, the master node may obtain the respective powers of the N first slave nodes in a plurality of manners. The following separately describes possible cases.

In some optional implementations, the master node may determine the power of each slave node in the manner of power detection. Specifically, the master node may receive a feedback current from each first slave node, where the feedback current is determined by each first slave node based on a classification voltage sent by the master node. In addition, the master node determines the power of each first slave node based on the feedback current of each first slave node. Specific content of the power detection is described in detail in embodiments shown in FIG. 2 to FIG. 4. Details are not described herein again.

In some optional implementations, the master node may further determine the power of each first slave node in the manner of power negotiation. Specifically, the master node performs power negotiation with each first slave node, and determines a power of each first slave node based on a negotiation result of the power negotiation. Specific content of the power negotiation is described in detail in embodiments shown in FIG. 2 to FIG. 4. Details are not described herein again.

In some optional implementations, the N first slave nodes in the power supply system include a first set and a second set. The master node may obtain, in the manner of power negotiation and/or power detection, respective powers of first slave nodes included in the first set. In addition, the master node receives respective powers of first slave nodes included in the second set from the second set. In other words, the master node may obtain the respective powers of the N first slave nodes in the power supply system in different manners.

In some optional implementations, each first slave node in the second set may also determine the power of each first slave node in the manner of power negotiation and/or power detection. In addition, each first slave node in the second set reports the power of the first slave node to the master node.

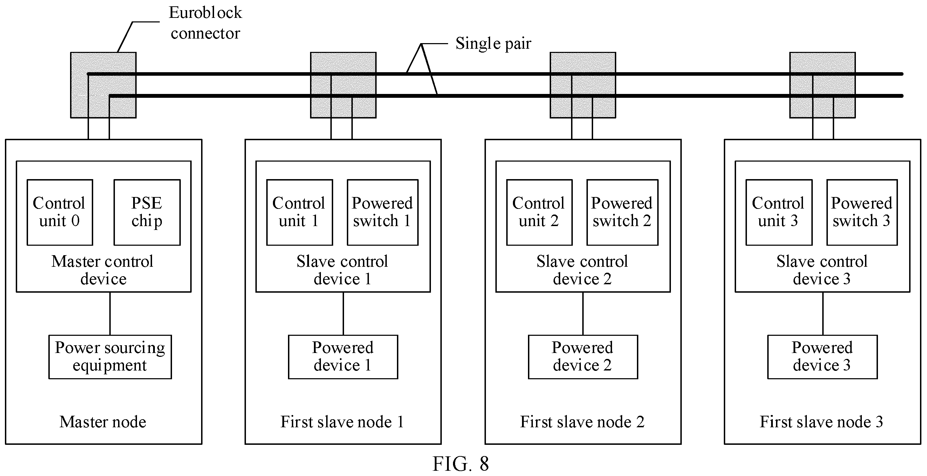

Descriptions about the power supply system are provided below by using N=3 as an example. FIG. 8 is a diagram of a power supply system according to an embodiment of this application.

FIG. 8 uses an example in which a bus is a single pair. In the embodiment shown in FIG. 8, a master node and each first slave node access the bus via a Euroblock connector. During actual application, the master node and each first slave node may alternatively access the bus in another manner. For example, the master node and each first slave node may access the bus via a T-shaped connector or the master node and each first slave node may be welded on the bus. Each node may access the bus in a same manner or different manners. This is not specifically limited herein.

In the embodiment shown in FIG. 8, the master node obtains respective powers of three first slave nodes in a plurality of manners.

For example, the master node may obtain the powers of the three first slave nodes in a manner of power negotiation or power detection; or may obtain powers of some first slave nodes (for example, a first slave node 1 and a second slave node 2) in a manner of power detection, and obtain a power of a remaining first slave node (for example, a first slave node 3) in a manner of power negotiation.

For example, if a control unit 3 of the first slave node 3 can obtain a power of a powered device 3 in the manner of power negotiation, a manner in which the master node obtains a power of the first slave node 3 may be directly receiving the power reported by the first slave node 3. For the remaining two first slave nodes, the master node may obtain the powers of the two first slave nodes in the manner of power detection and/or power negotiation.

In some optional implementations, the power supply system further includes a second slave node. The second slave node is a slave node newly added to a power supply system in which there is a first slave node that is already powered. In this case, the master node may determine a remaining power of the master node and a power of the second slave node. If the power of the second slave node is less than or equal to the remaining power, the master node supplies power to the second slave node.

In some optional implementations, a manner in which the master node obtains the power of the second slave node may be performing power negotiation with the second slave node via a control unit 0, or may be obtaining the power of the second slave node reported by the second slave node. This is not specifically limited herein.

The second slave node includes a slave control device and a powered device. The slave control device may be decoupled from or coupled to the powered device. This is not specifically limited herein.

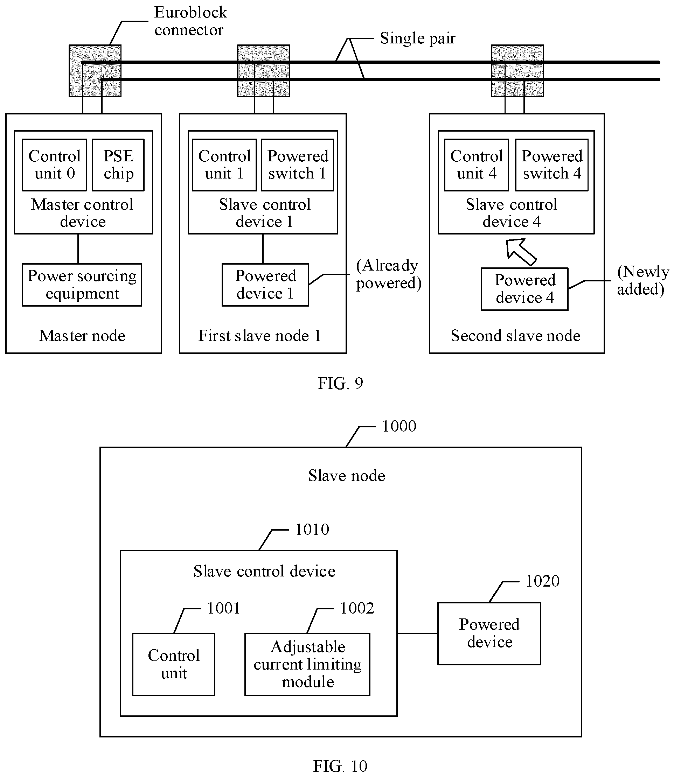

For example, FIG. 9 is a diagram of a power supply system according to an embodiment of this application.

As shown in FIG. 9, a first slave node 1 is a slave node that is already powered, to be specific, a powered device 1 is already in a power-on state. If a slave control device 4 of a second slave node is decoupled from a powered device 4 of the second slave node, the slave control device 4 may access a bus from the beginning, and a control unit 4 obtains power from the bus. If the powered device 4 is used as a powered device that newly accesses the power supply system, a master node needs to determine whether to supply power to the powered device 4.

A master control device may receive node backhaul data and power supply parameters such as a power and a current of a powered device included in each first slave node that are periodically reported by each first slave node. The master control device calculates a remaining power of the master node based on the information, and then compares the remaining power with a power of the second slave node. If the power of the second slave node is less than or equal to the remaining power, the master node supplies power to the second slave node.

The remaining power of the master node includes a power used to maintain access of the slave control device 4 and another power, and the power of the second slave node includes a power of the slave control device 4 and a power of the powered device 4. It may also be considered that the remaining power of the master node includes a power obtained by slave tracting powers of all powered devices on the bus from a maximum output power of the master node. The powers of all the powered devices include a power of each first slave node and a power of a slave control device that accesses the bus but is not mounted onto the powered device.

In some optional implementations, a structure of a slave node may alternatively be shown in FIG. 10. FIG. 10 is a diagram of a structure of a slave node according to an embodiment of this application.

As shown in FIG. 10, a slave node 1000 includes a slave control device 1010 and a powered device 1020. The slave control device 1010 includes a control unit 1001 and an adjustable current limiting module 1002.

When the slave node 1000 is a first slave node, if a master node supplies power to the first slave node, the control unit 1001 may set a current value of the adjustable current limiting module 1002 to a maximum output current of the master node, to connect a link between the master node and the first slave node, and supply power to the powered device 1020. If the master node does not supply power to the first slave node, the control unit 1001 may set the current value of the adjustable current limiting module 1002 to 0, to disconnect the link between the master node and the first slave node, and does not supply power to the powered device 1020.

If the slave node 1000 is a second slave node, and if the master node supplies power to the second slave node, the control unit 1001 may set the current value of the adjustable current limiting module 1002 to a remaining current (also referred to as a baseline current) of the master node, to connect the link between the master node and the second slave node, and power on the powered device 1020. If the master node does not supply power to the second slave node, the control unit 1001 may set the current value of the adjustable current limiting module 1002 to 0, to disconnect the link between the master node and the second slave node, and does not supply power to the powered device 1020. Baseline current=Maximum output power of the master node/Power supply voltage-Total working current of a node that is powered on.

In some optional embodiments, the slave control device may further include the control unit, a powered switch, and the adjustable current limiting module. In this case, if the master node needs to supply power to the powered device, it needs to be ensured that the switch is turned off, and the current value of the adjustable current limiting module is a value of a current that can be connected.

This application further provides a power supply system, where a topology type of the power supply system is a point-to-multipoint topology, and the power supply system includes a master node and N first slave nodes, where N≥2, and N is an integer.

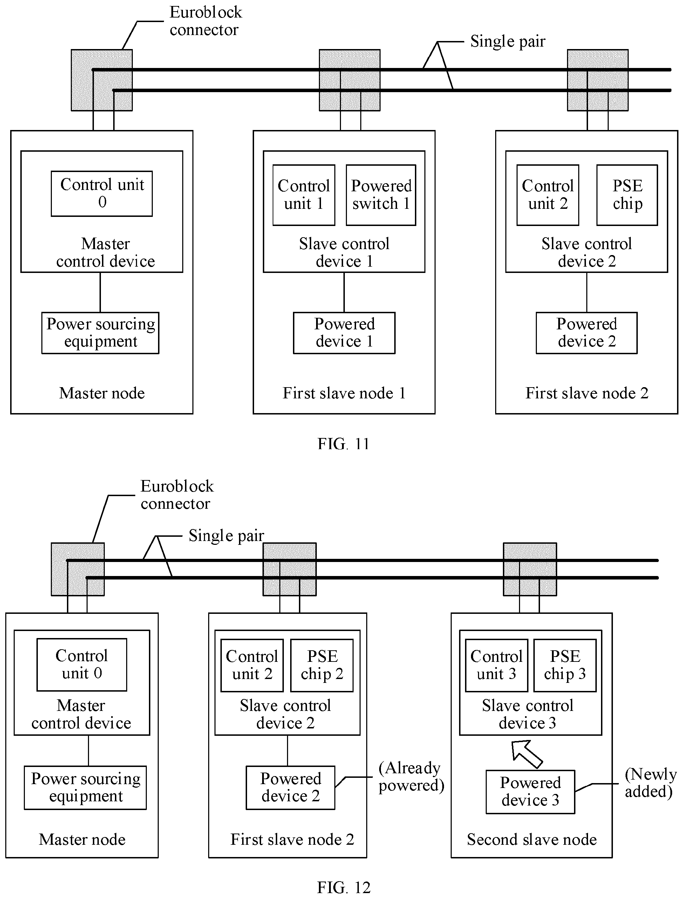

A power supply system is described by using an example in which N=3. FIG. 11 is a diagram of a power supply system according to this application.

Different from embodiments shown in FIG. 8 and FIG. 9, in the embodiment shown in FIG. 11, a master node does not include a PSE chip, and a manner in which the master node obtains a power of each slave node is directly reported by each slave node. Similarly, the master node supplies power to a target slave node in N first slave nodes based on powers of the N first slave nodes and an output power of the master node.

The target slave node includes all or some of the N first slave nodes.

When a sum of the powers of the N first slave nodes is less than or equal to the output power of the master node, it means that the master node may power on the N first slave nodes, to be specific, the master node determines that the target slave node includes the N first slave nodes. A control unit 0 in the master node connects links between the master node and the N first slave nodes, to supply power to the N first slave nodes.

When the sum of the powers of the N first slave nodes is greater than the output power of the master node, it means that the sum of the powers of the N first slave nodes exceeds a power budget of the master node. To be specific, it is determined that the target slave node includes M first slave nodes of the N first slave nodes, where 1≤M<N. The control unit 0 in the master node connects links between the master node and the M first slave nodes, to supply power to the M first slave nodes.

In the embodiment shown in FIG. 11, each of the N first slave nodes may send a power of each first slave node to the master node. In this way, the master node obtains the respective powers of the N first slave nodes. The master node supplies power to the target slave node in the N first slave nodes based on the powers of the N first slave nodes and the output power of the master node. Therefore, the target slave node may receive a power-on instruction from the master node, and connect a link between the master node and the target slave node according to the power-on instruction, to power on the target slave node.

In some optional embodiments, each first slave node may obtain the power of each first slave node in a manner of power detection or power negotiation.

For example, in the embodiment shown in FIG. 11, a first slave node 1 includes a control unit 1 and a powered switch 1. If a slave control device 1 included in the first slave node 1 is coupled to a powered device 1 included in the first slave node 1, the powered device 1 may be understood as load of the first slave node 1, and the control unit 1 may directly obtain a power of the powered device 1. If the slave control device 1 is decoupled from the powered device 1, the control unit 1 may determine the power of the powered device 1 in the manner of power negotiation. The control unit 1 may control, according to the power-on instruction, the powered switch 1 to connect a link between the master node and the first slave node 1. The powered switch 1 is configured to connect the link between the master node and the first slave node 1 according to a control instruction of the control unit 1.

For example, in the embodiment shown in FIG. 11, a slave control device 2 in a first slave node 2 is decoupled from a powered device 2 in the first slave node 2. The slave control device 2 includes a control unit 2 and a PSE chip. The PSE chip may determine a power of the powered device in a manner of power detection. Specifically, the PSE chip sends a detection voltage to the powered device 2, where the detection voltage is used to determine whether the powered device 2 is a standard powered device. When the powered device 2 is the standard powered device, the PSE chip sends a classification voltage to the powered device 2, to determine the power of the powered device 2. The PSE chip receives a feedback current from the powered device 2, and determines the power of the powered device 2 based on the feedback current. The feedback current is determined by the powered device 2 based on the classification voltage of the PSE chip. The PSE chip further sends the power of the powered device 2 to the control unit 2. Therefore, the control unit 2 receives the power of the powered device 2 from the PSE chip, and determines the power of the first slave node 2 based on a power of the powered device 2. The PSE chip is further configured to connect a link between the master node and the first slave node 2 according to a control instruction of the control unit 2.

In some optional implementations, a power supply system further includes a second slave node. The second slave node is a slave node newly added to a power supply system in which there is a first slave node that is already powered. In this case, the master node may determine a remaining power of the master node and a power of the second slave node. If the power of the second slave node is less than or equal to the remaining power, the master node supplies power to the second slave node.

The second slave node includes a slave control device and a powered device. The slave control device may be decoupled from or coupled to the powered device. This is not specifically limited herein.

For example, FIG. 12 is a diagram of a power supply system according to an embodiment of this application.

As shown in FIG. 12, a first slave node 2 is a slave node that is already powered, to be specific, a powered device 2 is already in a power-on state. If a slave control device 3 of a second slave node is decoupled from a powered device 3 of the second slave node, the slave control device 3 may access a bus from the beginning, and a control unit 3 obtains power from the bus. If the powered device 3 is used as a powered device that newly accesses a power supply system, a master node needs to determine whether to supply power to the powered device 3.

A master control device may receive node backhaul data and power supply parameters such as a power and a current of a powered device included in each first slave node that are periodically reported by each first slave node. The master control device calculates a remaining power of the master node based on the information, and then compares the remaining power with a power of the second slave node. If the power of the second slave node is less than or equal to the remaining power, the master node supplies power to the second slave node.

The remaining power of the master node includes a power used to maintain access of the slave control device 3 and another power, and the power of the second slave node includes a power of the slave control device 3 and the power of the powered device 3. It may also be considered that the remaining power of the master node includes a power obtained by slave tracting powers of all powered devices on the bus from a maximum output power of the master node. The powers of all the powered devices include a power of each first slave node and a power of a slave control device that accesses the bus but is not mounted onto the powered device.

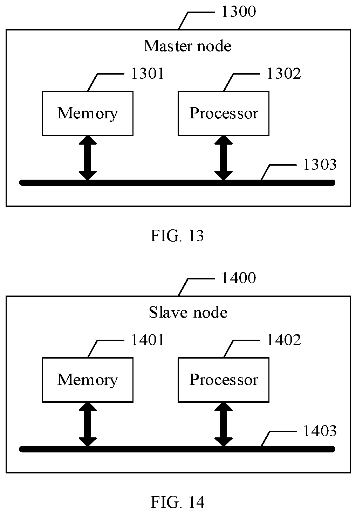

In the following, FIG. 13 is a diagram of a structure of a master node according to an embodiment of this application.

As shown in FIG. 13, a network device 1300 includes a memory 1301 and a processor 1302. The memory 1301 is connected to the processor 1302 through a bus 1303, and the memory 1301 is configured to store computer instructions.

The processor 1302 may communicate with the memory 1301, to enable the processor 1301 to invoke the computer instructions of the memory 1301, to perform a series of instruction operations in the operations performed by the master node in embodiments shown in FIG. 1A to FIG. 12.

The memory 1301 may be volatile storage or persistent storage. The processor 1301 may be a central processing unit, or may be a single-core processor. In addition, the processor 1301 may alternatively be a processor of another type, for example, a dual-core processor. This is not specifically limited herein.

In the following, FIG. 14 is a diagram of a structure of a slave node according to an embodiment of this application.

As shown in FIG. 14, a network device 1400 includes a memory 1401 and a processor 1402. The memory 1401 is connected to the processor 1402 through a bus 1403, and the memory 1401 is configured to store computer instructions.

The processor 1402 may communicate with the memory 1401, to enable the processor 1401 to invoke the computer instructions of the memory 1401, to perform a series of instruction operations in the operations performed by the slave node in embodiments shown in FIG. 1A and FIG. 1B and FIG. 5 to FIG. 12.

The memory 1401 may be volatile storage or persistent storage. The processor 1401 may be a central processing unit, or may be a single-core processor. In addition, the processor 1401 may alternatively be a processor of another type, for example, a dual-core processor. This is not specifically limited herein.

It should be noted that, the technical solution of this application is not limited by a transmission mechanism, a propagation medium, or a usage scenario, and is not limited to the Ethernet.

The transmission mechanism may be single-carrier pulse amplitude modulation (pulse amplitude modulation, PAM), or may be another mechanism, for example, discrete multi-tone (discrete multi-tone, DMT) modulation or orthogonal frequency division multiplexing (orthogonal frequency division multiplexing, OFDM). This is not specifically limited herein.

A propagation medium used by the bus may be a twisted pair, or may be another medium, for example, a parallel cable, an electrical power cable, or the like. This is not specifically limited herein.

A usage scenario may be a park, or may be another scenario in which a power supply system of a point-to-multipoint topology type can be deployed, for example, an industrial scenario, a vehicle-mounted scenario, or the like. This is not specifically limited herein.

It may be clearly understood by a person skilled in the art that, for the purpose of convenient and brief descriptions, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical, a mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A master node, wherein the master node and N first slave nodes are comprised in a point-to-multipoint topology, N≥2, and N is an integer; and
the master node is configured to:
connect links between the master node and all of the N first slave nodes in a time-division manner;
obtain respective powers of the N first slave nodes; and
supply power to a target slave node in the N first slave nodes based on the powers of the N first slave nodes and an output power of the master node.

2. The master node according to claim 1, comprising:
a control unit, configured to connect the links between the master node and all of the N first slave nodes in the time-division manner.

3. The master node according to claim 1 or 2, wherein the master node comprises a power sourcing equipment PSE chip, configured to:
receive a feedback current from each first slave node, wherein the feedback current is determined by each first slave node based on a classification voltage of the PSE chip; and
determine a power of each first slave node based on the feedback current of each first slave node.

4. The master node according to claim 1 or 2, wherein the master node further comprises the control unit, configured to:
perform power negotiation with each first slave node; and
determine a power of each first slave node based on a negotiation result of the power negotiation.

5. The master node according to any one of claims 2 to 4, wherein the control unit is configured to:
if a sum of the powers of the N first slave nodes is less than or equal to the output power of the master node, determine that the target slave node comprises the N first slave nodes; and
connect the links between the master node and the N first slave nodes, to supply power to the N first slave nodes.

6. The master node according to any one of claims 2 to 4, wherein the control unit is configured to:
if a sum of the powers of the N first slave nodes is greater than the output power of the master node, determine that the target slave node comprises M first slave nodes, wherein 1≤M<N; and
connect links between the master node and the M first slave nodes, to supply power to the M first slave nodes.

7. The master node according to any one of claims 1 to 6, wherein the master node is further connected to a second slave node, and the second slave node is a slave node newly added to a system in which there is a first slave node that is already powered; and
the master node comprises the control unit, configured to:
determine a remaining power of the master node;
obtain a power of the second slave node; and
supply power to the second slave node if the power of the second slave node is less than or equal to the remaining power.

8. The master node according to claim 7, wherein the control unit is specifically configured to:
perform power negotiation with the second slave node, to determine the power of the second slave node; or
obtain the power of the second slave node from the second slave node.

9. The master node according to any one of claims 2 to 8, wherein the control unit is configured to:
send a target packet to each first slave node, wherein the target packet indicates a time period in which the master node is connected to each first slave node, to enable the master node to be connected to one first slave node in a same time period.

10. The master node according to any one of claims 1 to 9, wherein the master node comprises a master control device and a power sourcing equipment, and the master control device is coupled to or decoupled from the power sourcing equipment.

11. A power supply method, wherein the method is applied to a master node, the master node and N first slave nodes are comprised in a point-to-multipoint topology, N≥2, and N is an integer; and the method comprises:
connecting links between the master node and all of the N first slave nodes in a time-division manner;
obtaining respective powers of the N first slave nodes; and
supplying power to a target slave node in the N first slave nodes based on the powers of the N first slave nodes and an output power of the master node.

12. The method according to claim 11, wherein the obtaining respective powers of the N first slave nodes comprises:
receiving a feedback current from each first slave node, wherein the feedback current is determined by each first slave node based on a classification voltage of the master node; and
determining a power of each first slave node based on the feedback current of each first slave node.

13. The method according to claim 11, wherein the obtaining respective powers of the N first slave nodes comprises:
performing power negotiation with each first slave node; and
determining a power of each first slave node based on a negotiation result of the power negotiation.

14. The method according to any one of claims 11 to 13, wherein the supplying power to a target slave node in the N first slave nodes based on the powers of the N first slave nodes and an output power of the master node comprises:
if a sum of the powers of the N first slave nodes is less than or equal to the output power of the master node, determining that the target slave node comprises the N first slave nodes; and
connecting the links between the master node and the N first slave nodes, to supply power to the N first slave nodes.

15. The method according to any one of claims 11 to 13, wherein the supplying power to a target slave node in the N first slave nodes based on the powers of the N first slave nodes and an output power of the master node comprises:
if a sum of the powers of the N first slave nodes is greater than the output power of the master node, determining that the target slave node comprises M first slave nodes, wherein 1≤M<N; and
connecting links between the master node and the M first slave nodes, to supply power to the M first slave nodes.

16. The method according to any one of claims 11 to 13, wherein the master node is further connected to a second slave node, and the second slave node is a slave node newly added to a system in which there is a first slave node that is already powered; and
after the supplying power to a target slave node in the N first slave nodes, the method further comprises:
determining a remaining power of the master node;
obtaining a power of the second slave node; and
supplying power to the second slave node if the power of the second slave node is less than or equal to the remaining power.

17. The method according to claim 16, wherein the obtaining a power of the second slave node comprises:
performing power negotiation with the second slave node, to determine the power of the second slave node; or
obtaining the power of the second slave node from the second slave node.

18. The method according to any one of claims 11 to 17, wherein the connecting links between the master node and all of the N first slave nodes in a time-division manner comprises:
sending a target packet to each first slave node, wherein the target packet indicates a time period in which the master node is connected to each first slave node, to enable the master node to be connected to one first slave node in a same time period.

19. A slave node, wherein the slave node and a master node are comprised in a point-to-multipoint topology, and the slave node is configured to:
send a power of the slave node to the master node;
receive a power-on instruction from the master node; and
connect a link between the master node and the slave node according to the power-on instruction, to power on the slave node.

20. The slave node according to claim 19, wherein the slave node comprises a control unit, configured to:
obtain the power of the slave node;
send the power of the slave node to the master node;
receive the power-on instruction from the master node; and
control, according to the power-on instruction, the link between the master node and the slave node to be connected, to power on the slave node.

21. The slave node according to claim 20, wherein the slave node further comprises a switch;
the control unit is specifically configured to control, according to the power-on instruction, the switch to connect the link between the master node and the slave node; and
the switch is configured to connect the link between the master node and the slave node according to a control instruction of the control unit.

22. The slave node according to claim 20, wherein the slave node comprises a slave control device and a powered device, the slave control device is decoupled from the powered device, and the slave control device comprises a PSE chip and the control unit;
the PSE chip is configured to:
determine a power of the powered device based on a feedback current from the powered device, wherein the feedback current is determined by the powered device based on a classification voltage of the PSE chip; and
send the power of the powered device to the control unit;
the control unit is further configured to:
receive the power of the powered device from the PSE chip; and
determine the power of the slave node based on the power of the powered device; and
the PSE chip is further configured to connect the link between the master node and the slave node according to a control instruction of the control unit.

23. A power supply method, wherein the method is applied to a slave node, the slave node and a master node are comprised in a point-to-multipoint topology, and the method comprises:
sending a power of the slave node to the master node;
receiving a power-on instruction from the master node; and
connecting a link between the master node and the slave node according to the power-on instruction, to power on the slave node.

24. The method according to claim 23, wherein before the sending a power of the slave node to the master node, the method further comprises:
obtaining the power of the slave node through power detection or power negotiation.

25. A power supply system, wherein a topology of the power supply system is a point-to-multipoint topology, the power supply system comprises a master node and N first slave nodes, N≥2, and N is an integer; and the master node is configured to:
connect links between the master node and all of the N first slave nodes in a time-division manner;
obtain respective powers of the N first slave nodes; and
supply power to a target slave node in the N first slave nodes based on the powers of the N first slave nodes and an output power of the master node.

26. The power supply system according to claim 25, wherein the master node is specifically configured to:
receive a feedback current from each first slave node, wherein the feedback current is determined by each first slave node based on a classification voltage of the master node; and
determine a power of each first slave node based on the feedback current of each first slave node.

27. The power supply system according to claim 25, wherein the master node is specifically configured to:
perform power negotiation with each first slave node; and
determine a power of each first slave node based on a negotiation result of the power negotiation.

28. The power supply system according to claim 25, wherein the N first slave nodes comprise a first set and a second set; and
the master node is configured to:
obtain, through power negotiation and/or power detection, respective powers of first slave nodes comprised in the first set; and
receive respective powers of first slave nodes comprised in the second set from the second set.

29. The power supply system according to claim 28, wherein the second set is configured to determine, through the power negotiation and/or the power detection, the respective powers of the first slave nodes comprised in the second set.

30. The power supply system according to any one of claims 25 to 29, wherein the master node is specifically configured to:
if a sum of the powers of the N first slave nodes is less than or equal to the output power of the master node, determine that the target slave node comprises the N first slave nodes; and
connect the links between the master node and the N first slave nodes, to supply power to the N first slave nodes.

31. The power supply system according to any one of claims 25 to 29, wherein the master node is specifically configured to:
if a sum of the powers of the N first slave nodes is greater than the output power of the master node, determine that the target slave node comprises M first slave nodes, wherein 1≤M<N; and
connect links between the master node and the M first slave nodes, to supply power to the M first slave nodes.

32. The power supply system according to any one of claims 25 to 31, wherein the power supply system further comprises a second slave node, and the second slave node is a slave node newly added to a system in which there is a first slave node that is already powered; and
the master node is specifically configured to:
determine a remaining power of the master node;
obtain a power of the second slave node; and
supply power to the second slave node if the power of the second slave node is less than or equal to the remaining power.

33. The power supply system according to claim 32, wherein the master node is specifically configured to:
perform power negotiation with the second slave node, to determine the power of the second slave node; or
obtain the power of the second slave node from the second slave node.

34. A power supply system, wherein a topology of the power supply system is a point-to-multipoint topology, the power supply system comprises a master node and N first slave nodes, N≥2, and N is an integer;
each of the N first slave nodes is configured to:
send a power of each first slave node to the master node;
the master node is configured to:
obtain respective powers of the N first slave nodes; and
supply power to a target slave node in the N first slave nodes based on the powers of the N first slave nodes and an output power of the master node; and
the target slave node is configured to:
receive a power-on instruction from the master node; and
connect a link between the master node and the target slave node according to the power-on instruction, to power on the target slave node.

35. The power supply system according to claim 34, wherein each first slave node is specifically configured to:
obtain the power of each first slave node through power detection or power negotiation.

36. The power supply system according to claim 34 or 35, wherein the power supply system further comprises a second slave node, and the second slave node is a slave node newly added to a system in which there is a first slave node that is already powered; and
the master node is specifically configured to:
determine a remaining power of the master node;
obtain a power of the second slave node; and
supply power to the second slave node if the power of the second slave node is less than or equal to the remaining power.

37. A master node, comprising a processor and a memory, wherein
the memory is configured to store computer instructions, and the processor is configured to invoke the computer instructions, to enable the master node to perform the method according to any one of claims 11 to 18.

38. A slave node, comprising a processor and a memory, wherein
the memory is configured to store computer instructions, and the processor is configured to invoke the computer instructions, to enable the slave node to perform the method according to claim 23 or 24.

39. A chip, comprising a processor and a memory, wherein
the memory is configured to store instructions, and the processor performs the method according to any one of claims 11 to 18 or the method according to claim 23 or 24 based on the instructions.
